# FASCICULE DE BREVET EUROPEEN

(11) **EP 1 240 076 B1**
(45) Date de publication et mention de la délivrance du brevet: **19.03.2003**
(21) Numéro de dépôt: 00990068.9
(22) Date de dépôt: 19.12.2000
(51) Int. Cl.: B63J 1/00, B01D 1/08

(54) **SYSTEME DE DESSALINISATION D'EAU DE MER POUR BATEAU**
SEEWASSERENTSALZUNGSSYSTEM FÜR BOOTE
DESALINATION SYSTEM OF SEA WATER FOR SHIP

(30) Priorité: 20.12.1999 FR 9916088
(43) Date de publication de la demande: 18.09.2002
(73) Titulaire: Dessalator S.a.r.l., 06600 Antibes (FR)
(72) Inventeur: WAGNER, Patrick, F-06600 Antibes (FR)
(74) Mandataire: Bonneau, Gérard
(86) Numéro de dépôt international: FR0003598
(87) Numéro de publication internationale: WO01046007

(56) Documents cités:
- ES-A- 2 117 533
- US-A- 2 143 620
- US-A- 4 627 797
- ADAMSON & PIZZINO: "Reverse-osmosis desalination for shipboard potable water" NAVAL ENGINEERS JOURNAL, vol. 91, no. 2, avril 1979 (1979-04), pages 131-139, XP002145829

## Description

### Domaine Technique :

La présente invention concerne les systèmes de dessalinisation de l'eau de mer embarqués sur les bateaux, en particulier les voiliers, et destinés à fournir de l'eau potable aux occupants des bateaux lorsqu'ils se trouvent en mer, et concerne en particulier un système de dessalinisation de l'eau de mer fonctionnant aussi bien à l'aide du courant alternatif que du courant continu.

### Etat de la technique :

Les voiliers d'une certaine importance sont de plus en plus souvent équipés d'un système de dessalinisation de l'eau de mer permettant de fournir l'eau potable nécessaire aux occupants du bateau lorsque celui-ci se trouve en mer pour un certain temps. Un tel système de dessalinisation décrit dans l'article « Reverse-Osmosis desalinisation for shipboard potable water » de Adamson & Pizzino, publié dans le « Naval Engineers Journal, vol. 91, d'avril 1979, est généralement constitué d'un dispositif de membrane à osmose inversée à travers laquelle l'eau de mer est forcée sous pression de sorte que seule l'eau potable traverse la membrane alors que la majeure partie des sels minéraux est bloquée par la membrane.

Une pompe est nécessaire pour forcer l'eau de mer sous pression relativement importante pouvant atteindre 65 bars, à traverser la membrane utilisée pour effectuer l'osmose inversée. Un mécanisme d'entraînement de la pompe est donc nécessaire. Ce mécanisme d'entraînement est généralement un moteur à courant continu alimenté par la batterie du bord qui est rechargée par une dynamo entraînée en rotation par une éolienne. Il va de soi qu'une telle batterie, suffisante pour alimenter le système d'éclairage du bateau se décharge rapidement lorsqu'il s'agit d'alimenter un moteur. Pour pallier une possible déficience de la batterie, les voiliers disposent d'un groupe électrogène fournissant du courant alternatif. Lorsque la batterie est déchargée ou lorsqu'il n'y a pas assez de vent pour faire fonctionner l'éolienne ou lorsque le bateau est à l'accostage, il est donc habituel de mettre en route le groupe électrogène, et de convertir à l'aide d'un chargeur, le courant alternatif 220 volts en courant continu 12 ou 24 volts susceptible d'alimenter le moteur utilisé pour la dessalinisation de l'eau de mer. Il est clair qu'un tel système consomme une énergie considérable du fait de la transformation du courant alternatif en courant continu et n'est pas du tout pratique à mettre en oeuvre.

### Exposé de l'invention :

Par conséquent, le but de l'invention est de fournir un système de dessalinisation de l'eau de mer dont le mécanisme d'entraînement de la pompe soit indifféremment un moteur à courant continu ou un moteur à courant alternatif, le passage de l'un à l'autre se faisant automatiquement sans intervention humaine.

L'invention a donc pour objet un Système de dessalinisation de l'eau de mer comprenant une cellule à osmose inversée (12) contenant une membrane semi-perméable pour effectuer la dessalinisation de l'eau par passage de l'eau de mer sous pression à travers la membrane, une pompe pour forcer l'eau de mer sous pression à travers la membrane et un mécanisme d'entraînement de l'axe de la pompe comprenant un moteur à courant continu alimenté par une tension continue et un moteur à courant alternatif alimenté par une tension alternative. Les moteurs sont montés en position d'entraînement de l'axe de la pompe par une courroie entraînant respectivement une poulie à chacune des extrémités de l'axe, chacune des courroies reliant l'arbre d'entraînement du moteur correspondant à l'axe de la pompe de sorte que chacun des moteurs entraîne la rotation de l'axe de la pompe lorsqu'il est activé. Le mécanisme d'entraînement comprend des moyens de débrayage résultant du montage en roue libre de chacune des poulies sur l'axe de la pompe, de sorte que la poulie correspondant à l'un des moteurs se met en roue libre lorsque l'autre moteur est activé pour entraîner l'axe de la pompe.

### Brève description des figures :

Les buts, objets et caractéristiques de l'invention ressortiront plus clairement de la description qui suit faite en référence aux dessins dans lesquels :
- la figure 1 représente schématiquement un bateau dans lequel a été installé un système de dessalinisation de l'eau de mer selon l'invention, et
- la figure 2 représente schématiquement un mode de réalisation du système de dessalinisation de l'eau de mer selon l'invention montrant le moteur à courant continu ainsi que le moteur à courant alternatif utilisés pour entraîner la pompe.

### Description détaillée de l'invention :

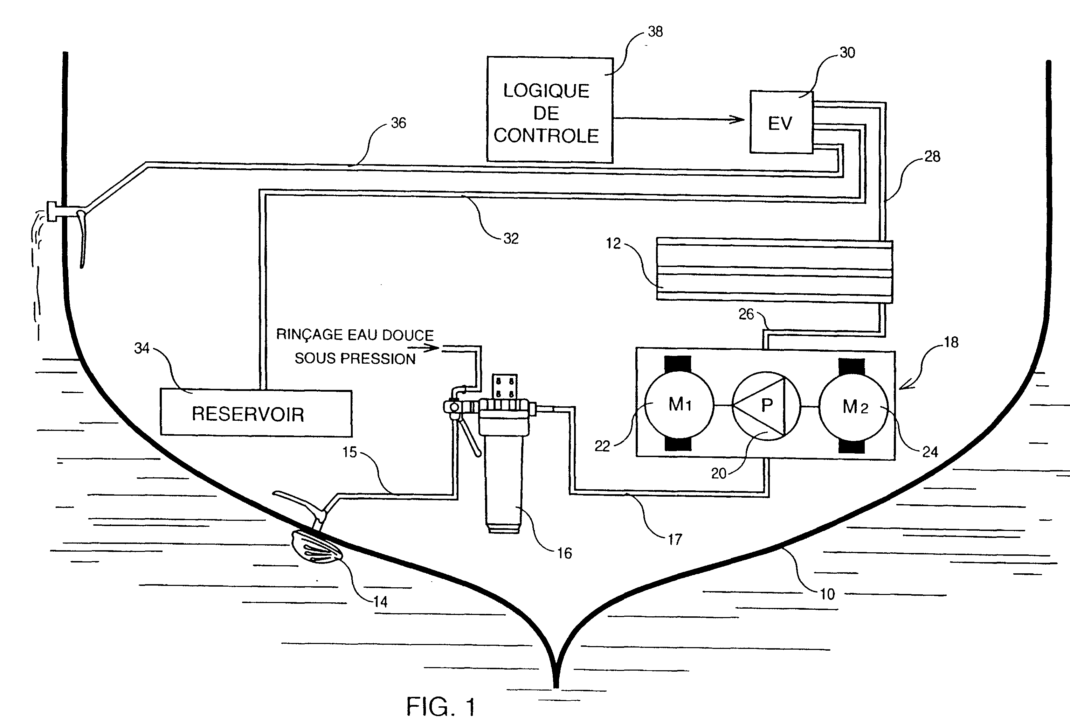

Le système de dessalinisation selon l'invention est représenté schématiquement à l'intérieur d'une coque de bateau 10 sur la figure 1. La dessalinisation se fait grâce à une cellule à osmose inversée 12 contenant une membrane semi-perméable. L'eau de mer est envoyée sous une pression d'au moins 26 bars et pouvant atteindre 65 bars dans la cellule 12. L'eau traverse la membrane semi-perméable mais pas les sels minéraux. Ceci permet d'obtenir de l'eau douce avec un taux de salinité inférieur au seuil légal. L'eau de mer à dessaliniser est introduite grâce à l'action de la pompe, par la vanne d'entrée 14. Cette eau passe d'abord dans un filtre 16 qui retient les particules ayant une taille supérieure à un seuil déterminé. On doit noter que périodiquement le filtre 16 doit être nettoyé et un rinçage du tuyau 15 d'arrivée de l'eau de mer est pratiqué.

L'eau de mer filtrée est ensuite envoyée par un tuyau 17 à un bloc pompe 18 comprenant une pompe 20, un moteur à courant continu (M1) 22 et un moteur à courant alternatif (M2) 24, l'un des deux moteurs entraînant l'axe de la pompe 20 comme expliqué ci-dessous.

La pompe 20 en fonctionnement force l'eau de mer par le tuyau 26 contre la membrane se trouvant dans la cellule à osmose inversée 12. L'eau douce recueillie à la sortie de la cellule 12 par le tuyau 28 est envoyée vers une électrovanne 30 qui l'envoie par le tuyau 32 vers un réservoir à eau douce 34 lorsque son taux de salinité répond à une certaine qualité de potabilité, ou l'évacue à l'extérieur par le tuyau 36 lorsque l'eau recueillie ne présente pas une qualité de potabilité suffisante.

L'envoi de l'eau vers l'un ou l'autre des tuyaux 32 et 36 par l'électrovann 30 est commandé par une logique de contrôle qui peut être une simple carte électronique construite en technologie CMOS. La commande transmise par la logique de contrôle 38 tient compte de la salinité de l'eau de mer fournie par un détecteur de salinité (non montré) comportant deux électrodes mesurant la salinité par résistivité. Deux seuils sont mesurés, un seuil de potabilité et un seuil de non potabilité correspondant en fait au seuil légal. Lorsque le taux de salinité est au dessous du seuil de potabilité, c'est que l'eau est potable et elle est donc envoyée par le tuyau 32 vers le réservoir 34. Lorsque le taux de salinité augmente et passe au dessus du seuil de potabilité, on attend qu'il franchisse le seuil de non potabilité pour envoyer l'eau par le tuyau 36 pour être rejetée en mer. Si le taux de salinité diminue ensuite, l'eau continue d'être rejetée en mer jusqu'à ce que le taux de salinité passe au dessous du seuil de potabilité. A ce moment, l'eau étant considérée comme suffisamment potable, elle est de nouveau envoyée dans le réservoir 34 par le tuyau 32. Cette procédure de commande de l'électrovanne 30 à trois états garantit une production de qualité et une grande fiabilité de la commande.

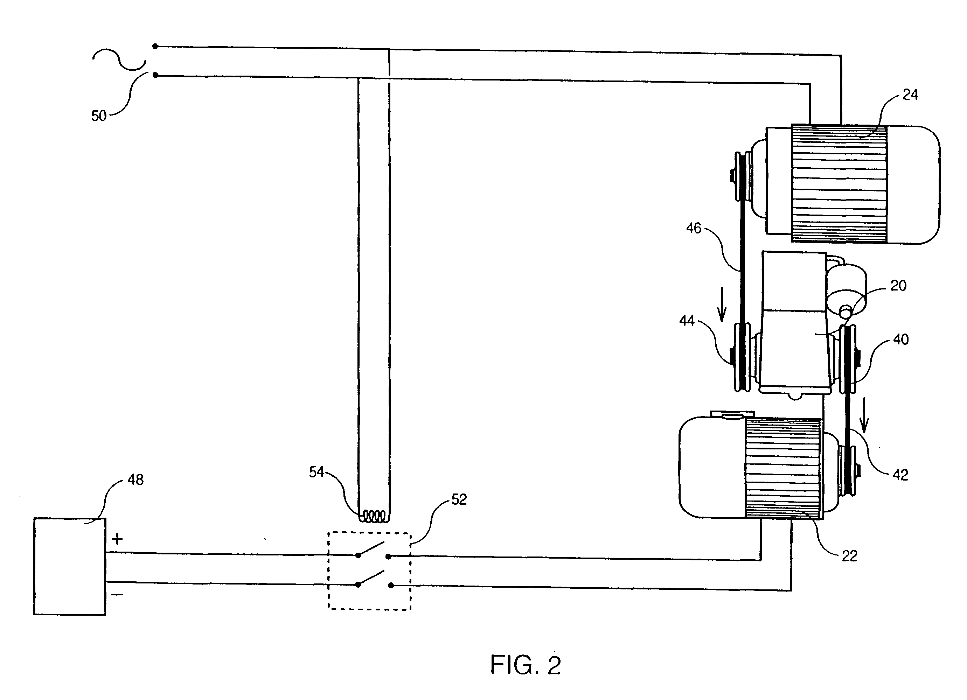

Le bloc pompe 18 selon l'invention illustré sur la figure 2 comprend une pompe 20 dont l'axe comprend une poulie montée à chaque extrémité de l'axe.

La poulie 40 est reliée à l'arbre d'entraînement du moteur à courant continu 22 par une courroie 42, et la poulie 44 est reliée à l'arbre d'entraînement du moteur à courant alternatif 24 par la courroie 46. Chacune des poulies 40 et 44 est montée en roue libre sur l'axe de la pompe. Lorsque l'un des moteurs 22 ou 24 (et un seul) entraîne la rotation de la poulie correspondante par la courroie associée dans le sens de la flèche, la force de friction exercée par la poulie étant inférieure à la force de friction exercée par l'autre moteur à l'arrêt, la poulie correspondante se met en roue libre et le moteur à l'arrêt ne tourne pas. Ainsi, en supposant que le moteur à courant continu 22 soit activé, il entraîne la rotation de la poulie 40 par l'intermédiaire de la courroie 42 et donc entraîne la rotation de l'axe de la pompe 20. Mais la force de friction exercée par l'arbre du moteur à courant alternatif 24 étant plus élevée que l'effort de friction exercée par la poulie, la poulie 44 se met en roue libre, la courroie 46 reste immobile et n'entraîne pas le moteur 24. De la même façon, lorsque c'est le moteur à courant alternatif 24 qui est activé, la poulie 40 reste immobile, la courroie 42 reste immobile et n'entraîne pas le moteur 22.

Une caractéristique importante de l'invention est d'alimenter seulement l'un des moteurs au cas où le système dispose de l'alimentation 12 ou 24 volts d'une batterie 48 et de l'alimentation 220 volts 50 fournie par un groupe électrogène. Pour ce faire, l'alimentation alternative 220 volts est prioritaire comme illustré sur la figure 2 qui représente un premier mode de réalisation de l'invention. En effet, en supposant que le moteur à courant continu 22 soit alimenté par la seule batterie 48, le commutateur 52 est en position fermée. Dès que le groupe électrogène est mis en marche, le relais électromagnétique 54 est activé et le commutateur 52 s'ouvre, coupant ainsi l'alimentation du moteur à courant continu 22. Ainsi, seul le moteur à courant alternatif 24 est alimenté.

On doit noter que, dans un deuxième mode de réalisation, la commutation de l'alimentation en courant continu à l'alimentation en courant alternatif s'effectue de façon automatique dans la logique de contrôle. En outre, la logique de contrôle gère les diverses temporisations telle qu'une temporisation de 30 secondes mise en oeuvre avant de pouvoir recueillir l'eau potable dans le réservoir après la mise en route du système.

## Revendications

1. Système de dessalinisation de l'eau de mer comprenant une cellule à osmose inversée (12) contenant une membrane semi-perméable pour effectuer la dessalinisation de l'eau par passage de l'eau de mer sous pression à travers ladite membrane, une pompe (20) pour forcer l'eau de mer sous pression à travers ladite membrane et un mécanisme d'entraînement de l'axe de ladite pompe
ledit système étant **caractérisé en ce que** :
ledit mécanisme d'entraînement comprend un moteur à courant continu (22) alimenté par une tension continue (48) et un moteur à courant alternatif (24) alimenté par une tension alternative (50), **en ce que**
lesdits moteurs sont montés en position d'entraînement de l'axe de ladite pompe par une courroie (42 ou 46) entraînant respectivement une poulie (40 ou 44) à chacune des extrémités dudit axe, chacune desdites courroies reliant l'arbre d'entraînement du moteur correspondant à l'axe de ladite pompe de sorte que chacun desdits moteurs entraîne la rotation de l'axe de ladite pompe lorsqu'il est activé, et **en ce que**
ledit mécanisme d'entraînement comprend des moyens de débrayage résultant du montage en roue libre de chacune desdites poulies sur l'axe de ladite pompe (20), de sorte que la poulie correspondant à l'un desdits moteurs se met en roue libre lorsque l'autre desdits moteurs est activé pour entraîner l'axe de ladite pompe.

2. Système selon la revendication 1, comprenant en outre des moyens de sélection pour activer seulement ledit moteur à courant alternatif (24) et donc entraîner l'axe de ladite pompe (20) lorsque les deux moteurs sont alimentés.

3. Système selon la revendication 2, dans lequel lesdits moyens de sélection comprennent un relais électromagnétique (54) alimenté par ladite tension alternative (50) lorsque celle-ci est connectée et un commutateur (52) dans le circuit d'alimentation dudit moteur à courant continu (22), ledit commutateur étant normalement fermé et se mettant en position ouverte lorsque ledit relais électromagnétique est alimenté par ladite tension alternative de sorte que ledit moteur à courant continu cesse d'être activé dès que ladite tension alternative est connectée.

4. Système selon la revendication 2, dans lequel lesdits moyens de sélection sont constitués par une logique de contrôle (38) telle qu'une carte électronique ou technologie CMOS

5. Système selon l'une des revendications 1 à 4, comprenant en outre un réservoir (34) dans lequel est envoyée l'eau dessalinisée après son passage à travers ladite membrane (12).

6. Système selon la revendication 5, comprenant en outre une électrovanne (30) pour envoyer l'eau dessalinisée dans ledit réservoir lorsque la qualité de ladite eau est suffisante et pour rejeter l'eau dessalinisée lorsque sa qualité est insuffisante.

7. Système selon la revendication 6, comprenant en outre un moyen d'analyse de la salinité de l'eau pour fournir un seuil de potabilité et un seuil de non potabilité de l'eau dessalinisée, ledit seuil de non potabilité correspondant à une salinité plus élevée que ledit seuil de potabilité, ladite eau étant rejetée seulement lorsque sa salinité dépasse le seuil de non potabilité, et l'eau n'étant stockée dans ledit réservoir (34) après avoir été rejetée pour qualité insuffisante que lorsque sa salinité est redescendue au dessous dudit seuil de potabilité.

8. Système selon l'une des revendications précédentes, embarqué à bord d'un bateau tel qu'un voilier.

## Claims

1. A seawater desalination system featuring a reverse osmosis cell (12) containing a semi-permeable membrane for performing desalination of the seawater by passing seawater under pressure through said membrane, a pump (20) for forcing pressurized seawater through said membrane and a mechanism driving said pump shaft
said system being **characterized in that**:
said driving mechanism comprises a direct current motor (22) powered by a direct voltage (48) and an alternating current motor (24) powered by an alternating voltage (50), **in that** :
said motors are mounted in position to drive the shaft of said pump by a belt (42 or 46) which drives a pulley (40 or 44) at each end of said shaft, each of said belts linking the drive shaft of the corresponding motor to the shaft of said pump such that each of said motors drives the shaft of said pump in rotation when it is activated, and **in that** :
said drive mechanism includes clutching means resulting from the freewheel configuration of each of said pulleys on the shaft of said pump (20), such that the pulley corresponding to one of said motors freewheels while the other motor is activated to drive the shaft of said pump.

2. The system according to claim 1, also including selection means for activating only said alternating current motor (24) and thus driving the shaft of said pump (20) when both motors are supplied with electrical power.

3. The system according to claim 2, in which said selection means include an electromagnetic relay (54) supplied by said alternating current (50) when it is connected and a switch (52) in the power supply circuit of said direct current motor (22), said switch being normally closed and moving to open position when said electromagnetic relay is powered by said alternating current so that said direct current motor is no longer activated when said alternating current is connected.

4. The system according to claim 2, in which said selection means are comprised by control logic (38) such as an electric board or CMOS technology.

5. The system according to any one of claims 1 to 4, also including a tank (34) into which is directed the desalinated water after passing through said membrane (12).

6. The system according to claim 5, also including an electrovalve (30) to send desalinized water into said tank when the quality of said water is sufficient and to expel the desalinized water when its quality is insufficient.

7. The system according to claim 6, also featuring a water salinity analysis method to supply a potability threshold of the desalinized water, said non-potability threshold corresponding to a salinity which is higher than said potability threshold, said water being expelled only when its salinity exceeds the non-potability threshold, and being stored in said tank (34) after having been rejected for insufficient quality only when its salinity has returned below said potability threshold.

8. The system according to any of the previous claims, installed on board a boat such as a sailboat.

## Patentansprüche

1. System zur Entsalzung von Meerwasser, umfassend eine Umkehrosmose-Zelle (12) mit einer halbdurchlässigen Membran zur Durchführung der Entsalzung des Wassers durch Durchgang des Meerwassers unter Druck durch die Membran, eine Pumpe (20) zum Pressen des Meerwassers unter Druck durch die Membran und einen Mechanismus zum Antrieb der Welle der Pumpe, wobei dieses System **dadurch gekennzeichnet ist,**
**daß** der Antriebsmechanismus einen durch eine Gleichspannung (48) versorgten Gleichstrommotor (22) und einen durch eine Wechselspannung (50) versorgten Wechselstrommotor (24) aufweist,
**daß** die Motoren zum Antrieb der Welle der
Pumpe durch einen Antriebsriemen (42 oder 46) montiert sind, der jeweils eine Riemenscheibe (40 oder 44) an jedem der Enden dieser Welle antreibt, wobei jeder der Riemen die Antriebswelle des entsprechenden Motors mit der Welle der Pumpe so verbindet, daß jeder der Motoren die Welle der Pumpe in Drehung versetzt, wenn er aktiviert ist, und
**daß** der Antriebsmechanismus Auskupplungsmittel aufweist, die sich aus der Freilaufmontage jeder der Riemenscheiben auf der Welle der Pumpe (20) ergeben, so daß die einem der Motoren entsprechende Riemenscheibe auf Freilauf geschaltet wird, wenn der andere Motor aktiviert wird, um die Welle der Pumpe anzutreiben.

2. System nach Anspruch 1, umfassend außerdem Wählmittel, um nur den Wechselstrommotor (24) zu aktivieren und dadurch die Welle der Pumpe (20) anzutreiben, wenn beide Motoren versorgt sind.

3. System nach Anspruch 2, bei dem die Wählmittel ein elektromagnetisches Relais (54) umfassen, das durch die Wechselspannung (50) versorgt wird, wenn diese eingeschaltet ist, sowie einen Schalter (52) im Versorgungskreis des Gleichstrommotors (22), wobei der Schalter normalerweise geschlossen ist und geöffnet wird, wenn das elektromagnetische Relais durch die Wechselspannung versorgt wird, so daß die Aktivierung des Gleichstrommotors unterbrochen wird, sobald die Wechselspannung eingeschaltet ist.

4. System nach Anspruch 2, bei dem die Wählmittel aus einer Steuerlogik (38), wie z.B. einer elektronischen Karte oder einer CMOS-Technologie, bestehen.

5. System nach einem der Ansprüche 1 bis 4, umfassend außerdem einen Behälter (34), in den das nach Durchgang durch die Membran (12) entsalzte Wasser eingeleitet wird.

6. System nach Anspruch 5, umfassend ferner ein Magnetventil (30) zum Einleiten des entsalzten Wassers in den Behälter, wenn seine Qualität ausreichend ist, und zum Ausscheiden des entsalzten Wassers, wenn seine Qualität unzureichend ist.

7. System nach Anspruch 6, umfassend ferner Mittel zur Analyse der Salzhaltigkeit des Wassers, um eine Schwelle der Trinkbarkeit und eine Schwelle der Nichttrinkbarkeit des entsalzten Wassers zu liefern, wobei die Schwelle der Nichttrinkbarkeit einer höheren Salzhaltigkeit als die Schwelle der Trinkbarkeit entspricht, wobei das Wasser erst ausgeschieden wird, wenn seine Salzhaltigkeit die Schwelle der Nichttrinkbarkeit überschreitet, und das Wasser nach dem Ausscheiden wegen unzureichender Qualität erst dann in den Behälter (34) eingespeichert wird, wenn seine Salzhaltigkeit wieder unter die Schwelle der Trinkbarkeit gesunken ist.

8. System nach einem der vorhergehenden Ansprüche, das an Bord eines Schiffs, wie z.B. eines Segelschiffs, angeordnet ist.
